# EUROPÄISCHE PATENTSCHRIFT

(11) **EP 0 717 011 B1**
(45) Veröffentlichungstag und Bekanntmachung des Hinweises auf die Patenterteilung: **27.10.1999**
(21) Anmeldenummer: 95114516.8
(22) Anmeldetag: 15.09.1995
(51) Int. Cl.: C03B 33/08, C03B 33/085

(54) **Verfahren zum wärmeweichen Trennen von Glasrohren oder -platten**
Method for the heat-softening separation of class tubes or glass plates
Procédé de séparation à chaud de tubes ou plaques en verre

(30) Priorität: 14.12.1994 DE 4444547
(43) Veröffentlichungstag der Anmeldung: 19.06.1996
(73) Patentinhaber: SCHOTT ROHRGLAS GmbH, D-95448 Bayreuth (DE)
(72) Erfinder: Witzmann, André, Dr., D-95674 Waldershof (DE); Trinks, Ulla, Dr., D-95666 Mitterteich (DE)

(56) Entgegenhaltungen:
- DE-B- 1 244 346
- SU-A- 966 048
- US-A- 3 817 733
- SILICATES INDUSTRIELS, Bd. 38, Nr. 7/8, 1973, BELGIEN, Seiten 145-147, XP002007154 J.-L.LAMBERT: "découpe d'un verre plat étiré à l'aide d'un laser co2"

## Beschreibung

Die Erfindung betrifft ein Verfahren zum wärmeweichen Trennen von Glasrohren oder -platten.

Im Verlauf der Be- und Verarbeitung von Glasrohren und -platten ist eine der häufig vorkommenden Operationen die Trennung von Glasrohren und -platten. Das am häufigsten verwendete Trennverfahren besteht im Absprengen bzw. Brechen, das darauf beruht, in dem Glas eine Spannungszone und ggf. eine Schwachstelle durch einen vorherigen Anriß zu erzeugen, worauf das Glasrohr bzw. die Platte unter Rißbildung getrennt werden kann. Diese Verfahren sind außerordentlich schnell, haben aber den Nachteil, daß der Riß nicht immer genau entlang der gewünschten Trennlinie verläuft und vor allem, daß die Trennstelle scharfkantig ist und eine Verletzungsgefahr in sich birgt, sofern nach dem Trennen die Kanten nicht rundgeschmolzen werden. Des Weiteren können bei dünnwandigem Glas durch thermische Behandlung keine ausreichenden Bruchspannungen aufgebaut werden. Bei mechanischem Brechen, evtl mittels eines vorherigen Anrisses, entstehen instabile Enden, wobei Risse in Richtung der Rohrlängsachse laufen können.

Es ist auch bekannt, Glasrohre wärmeweich zu trennen, wobei man das Glas an der Trennstelle erweicht, und unter weiterem Erhitzen die erweichten Teile voneinander entfernt, was entweder unter dem Einfluß der Schwerkraft von selbst geschieht oder durch mechanisches Ausziehen erfolgt. Ein derartiges Verfahren ist z. B. in SU-PS 9 66 048 beschrieben. Nachteilig bei diesen Verfahren ist es, daß an der Trennstelle häufig ein Wulst auftritt, dessen Durchmesser größer ist als die Wandstärke des Rohres. Insbesondere bei Glasrohren mit einer Wandstärke von 0,25 mm und darunter ist ein wärmeweiches Trennen ohne Wulstbildung bisher nicht möglich. Die Wulstbildung ist aber für viele Anwendungszwecke außerordentlich störend, da durch den Wulst an der Trennstelle das Glasrohr einen anderen Außen- und Innendurchmesser besitzt, als ihn der Rest des Rohres hat.

Es ist ebenfalls bekannt, Glas mittels hochintensiver Laserbestrahlung zu schneiden. Hierbei wird das Glas längs der Trennlinie durch die Laserstrahlung verdampft. Die Nachteile dieses Verfahrens sind hohe thermische Spannungen im Glas, die Kondensation von verdampftem Glas bzw. dessen Zersetzungsprodukten in der Nähe der Trennstelle und mitunter eine störende Wulstbildung.

Aufgabe der Erfindung ist es, ein Verfahren zum wärmeweichen Trennen von dünnwandigen Glasplatten und Glasrohren zu finden, bei dem an der Trennstelle weder ein größerer Außen- noch ein kleinerer Innendurchmesser entsteht, als ihn das ursprüngliche Rohr hat, bzw. bei dem kein Wulst entsteht, der dicker als die Stärke der Glasplatte ist.

Diese Aufgabe wird durch das in Patentanspruch 1 beschriebene Verfahren zum wärmeweichen Trennen von Glasrohren oder -platten gelöst.

Das Verfahren beruht darauf, daß man bei dünnwandigen Glasrohren, die eine Wandstärke bzw. Glasplatten, die eine Dicke von höchstens 0,2 mm besitzen, das Rohr bzw. die Platte entlang der gewünschten Trennlinie in einer Breite von höchstens 0,4 mm erweicht, den erweichten Bereich durch Ausziehen auf eine Wandstärke von höchstens 0,05 mm bringt und anschließend durch weiteres Erhitzen im ausgezogenen Bereich trennt.

Die Erweichung der Platte entlang der gewünschten Trennlinie bzw. des Rohres entlang der im allgemeinen senkrecht zur Rohrachse verlaufenden Trennlinie soll in einer Breite von höchstens 0,4 mm erfolgen. Steigt die Breite darüber an, so wird die Gefahr einer Wulstbildung mit einem größeren Außendurchmesser als dem des Glasrohres bzw. einer größeren Dicke als der Plattenstärke immer wahrscheinlicher. Bevorzugt wird es, wenn das Rohr in einer höchstens 0,3 mm, insbesondere 0,2 mm breiten Zone erweicht wird.

Sobald das Rohr bzw. die Platte entlang der Trennlinie erweicht ist, werden die zwei Rohrteile bzw. Platten auseinander gezogen, so daß sich eine Wandstärke von höchstens 0,05 mm ergibt, wobei es bevorzugt wird, auf eine Wandstärke von höchstens 0,03 mm auszuziehen. Das Ausziehen kann mechanisch starr erfolgen, z. B. in dem nach ausreichender Erwärmung die Rohre bzw. Platten auseinanderbewegt werden. Es ist aber auch möglich, das Ausziehen elastisch zu gestalten, indem z. B. durch Federn oder Gewichte eine axial wirkende Kraft an das Rohr bzw. die Platte angelegt wird, durch die bei Erreichen einer geeigneten Viskosität entsprechend der Zähigkeit des erhitzten Materials das Rohr bzw. die Platte auseinandergezogen wird. In einem solchen Fall ist selbstverständlich die Strecke, um die ausgezogen wird, mechanisch, z. B. durch einen Anschlag zu begrenzen. Das Ausziehen unter Feder-oder Gewichtsvorspannung ist besonders empfehlenswert, da das Ausziehen dann bei Erreichen passender Viskosität sozusagen selbstregulierend erfolgt und dadurch eine schnellere Produktion möglich wird. Die Strecke, um die die beiden Teilstücke auseinandergezogen werden, um die erforderliche Wandstärke zu erzeugen (Ausziehlänge) beträgt etwa das fünfbis Fünfzigfache der Wandstärke bzw. Dicke des Glasrohrs. Selbstverständlich hängt die Ausziehlänge auch davon ab, in welcher Zonenbreite das Glas erweicht wurde. Je schmaler der erhitzte Bereich ist, desto kürzer kann die Ausziehlänge gehalten werden.

Im Anschluß an das Ausziehen auf die gewünschte Wandstärke von höchstens 0,05 mm, bevorzugt höchstens 0,03 mm und ggf. auch noch während des Ausziehens wird die Erwärmung an der Trennstelle in der Zonenbreite von höchstens 0,4 mm fortgesetzt, bis sich die Glasmasse längs der erhitzten Trennlinie trennt. Zur Formung der Trennkante und zum Abbau von thermischen Spannungen ist es vorteilhaft, die Wärmequelle erst kurz nach dem Trennvorgang, insbesondere etwa 0,2-0,5 Sekunden nach dem Trennvorgang abzuschalten.

Die Erhitzung soll möglichst schnell vorgenommen werden, um die unerwünschte Wärmediffusion längs des Rohres zu minimieren, sie darf jedoch nicht so kurz sein, daß das Glas an der Trennstelle nicht vollständig erweicht. Ferner darf die Erhitzung nicht so schnell und so hoch erfolgen, daß Teile der Glasmasse verdampfen und sich als störender Niederschlag auf dem Rohr bzw. der Platte absetzen. Ein Fachmann kann durch wenige Versuche die für die jeweilige Glasmasse und die Wandstärke des Rohres bzw. Dicke der Platte geeigneten Aufheizbedingungen ermitteln. Als Anhaltspunkt kann gesagt werden, daß unter üblichen Bedingungen ein wärmeweicher Trennvorgang innerhalb von weniger als 1 sec. abgeschlossen ist. Bei zu langsamer Erhitzung wird infolge der Wärmeleitung im Glas die Breite der Zone, in der das Glas erweicht, zu groß. Will man die Erweichungszone auf die geforderte Breite von höchstens 0,4 mm begrenzen, so sollten Erwärmungszeiten bis zum Erweichen des Glases von 1 Sekunde nicht überschritten werden. Die genannte Obergrenze kann jedoch geringfügig variieren, je nach der Wandstärke des Glases und dem Wärmeleitverhalten der Glasmasse.

Die Erweichung und Trennung des Glasrohres (der Glasplatte) kann mit jeder Wärmequelle vorgenommen werden, die eine ausreichend kleine Breite der Erhitzungszone ermöglicht. Bevorzugt werden eine stark fokussierte Infrarotstrahlungsquelle oder ganz besonders Laserstrahlung. Um die erforderliche schmale Breite der Erhitzungszone zu gewährleisten, sollte die Strahlbreite (quer zur Trennlinie) nicht größer als ca. 0,2 mm, insbesondere nicht größer als ca. 0,1 mm sein. Als Laser können alle Laser Verwendung finden, mit denen sich eine ausreichend hohe Leistungsdichte absorbierter, d.h. für die Erwärmung nutzbarer Strahlung entlang der Trennlinie erzeugen läßt. Die Erwärmung der Trennlinie mittels Laserstrahlung kann sowohl durch hinreichend schnelles Scannen eines vorzugsweise punkt- oder ellipsenförmig fokussierten Laserstrahls entlang der Trennlinie als auch durch die Verwendung eines entsprechend der Trennlinie geformten Laserstrahls erfolgen. Bei größeren Wandstärken kann auch eine Bestrahlung der Trennlinie von beiden Seiten vorteilhaft sein. Die Leistungsdichte soll im zeitlichen (z.B. bei gepulsten Lasern) und räumlichen (z.B. bei ungleichmäßiger Energieverteilung in Brennfleck) Mittel etwa zwischen 0,3 und 1 kW x cm⁻² liegen. Bei Überschreiten dieser Leistungsdichte kann ein Verdampfen des Glases erfolgen; wird die Leistungsdichte zu niedrig, dauert die Erhitzung so lange, daß das die Erwärmung des Glases infolge der Wärmeleitung nicht mehr auf die geforderte geringen Zonenbreite beschränkt werden kann. Die Leistungsdichte ist selbstverständlich auch auf das Absorptionsverhalten der eingestrahlten Strahlung in dem Glas abzustellen. Bevorzugte Laserlichtquellen sind CO₂-Laser wegen ihrer hohen Leistung.

Das Erweichen des Glases und das Trennen können unmittelbar hintereinander erfolgen. Sobald das Glas ausreichend erweicht ist, wird es auseinandergezogen und trennt sich an der verdünnten Stelle. Die Energiequelle wird, was bevorzugt ist, während des gesamten Erweichungs- und Trennvorgangs nicht abgestellt oder unterbrochen. Zur Beschleunigung des Verfahrens und zur Verringerung thermischer Spannungen kann das zu trennende Glasrohr bzw. die Platte in bereits vorgewärmter Form in dem Verfahren zum Einsatz kommen. Die Temperaturen, auf die das Glas vorgewärmt wird, dürfen selbstverständlich nicht so hoch sein, daß bereits eine Erweichung des Glases an sich auftritt, d. h. die Temperaturen müssen unterhalb der Transformationstemperatur des Glases liegen. Setzt man in dem Trennverfahren ein derart vorgewärmtes Glas ein, so muß zum Erweichen des Glases an der Trennstelle nur noch die Energie in das Glas eingebracht werden, die nötig ist, um das erwärmte Glas auf die zum Ausziehen erforderliche Temperatur zu bringen. Da diese Energie geringer ist, als wenn man ein Glas von Raumtemperatur ausgehend aufheizen müßte, kann man entweder bei gleichen Taktzeiten mit einer schwächeren Energiequelle auskommen oder bei einer gleich starken Energiequelle die Taktzeiten für das Trennen im Vergleich zu nicht vorgewärmten Glas verkürzen.

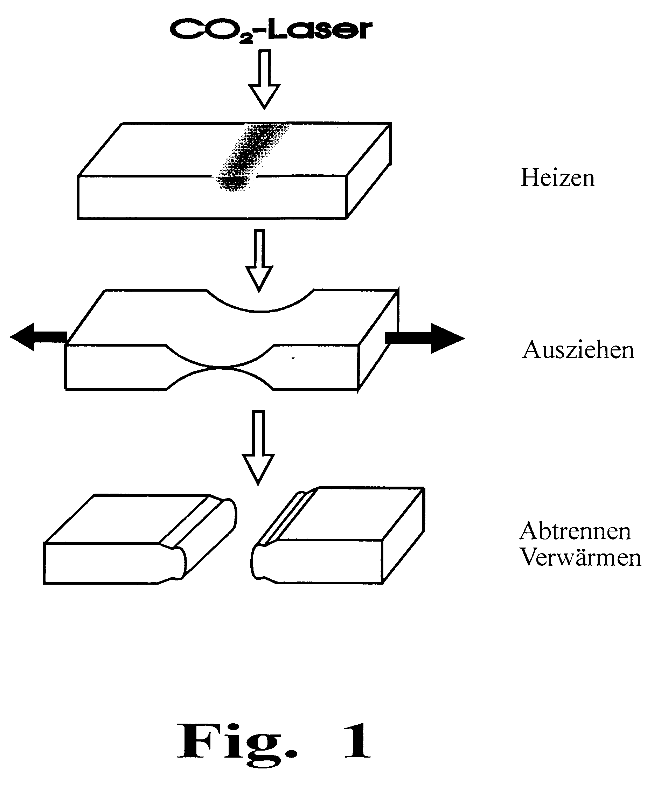

In der Abbildung ist das Trennen schematisch am Beispiel eines Glasplättchens dargestellt.

Die mit dem Verfahren erzielbaren Vorteile liegen im Vergleich zu den herkömmlichen Verfahren zum wärmeweichen Trennen darin, daß auch Rohre und Platten mit sehr dünner Wandstärke ohne störende Wulstbildung getrennt werden können. Im Vergleich zu den Verfahren, bei denen das Rohr bzw. die Platte gebrochen wird, entsteht eine verschmelzen Trennstelle, die mechanisch wesentlich widerstandsfähig ist als eine scharfkantige Bruchstelle, die im Gegensatz zu einer Bruchstelle nicht zu Absplitterungen neigt und von der bei der Handhabung im Gegensatz zu einem scharfkantigen Bruch keine Verletzungsgefahr ausgeht. Die Nachteile des Schneidens mittels Laserstrahlung wie Auftreten thermischer Spannungen, Wulstbildung, Verdampfungsniederschlag werden vermieden. Das Verfahren ist prinzipiell überall dort von Vorteil, wo Röhrchen mit dünnen Wanddicken oder Flachglas mit geringer Stärke getrennt werden sollen und wo alternative Verfahren wie Absprengen, Schmelzen, Ritzbrechen oder Schneiden Nachteile haben.

### Beispiel:

Ein Glasrohr mit einem Außendurchmesser von 7 mm und einer Wandstärke von 0,1 mm wurde an beiden Enden in eine Glasdrehbank eingespannt und mit einer Drehzahl von 360 Umdrehungen pro Minute gedreht. Das Rohr wurde mit einer elliptisch fokussierten Laserstrahlung eines CO₂-Lasers mit einer Leistung von 20 Watt bestrahlt. Der elliptische Laserstrahl hatte an seiner Auftreffstelle auf das Glas Halbachsenlängen von 0,1 und 1 mm. Durch die Rotation des Rohres ergab sich eine Trennlinie von 0,3 mm Breite. Nach 0,7 Sekunden war das Glas ausreichend erweicht und die beiden Glashälften wurden um 0,5 mm auseinandergezogen, wodurch sich an der Trennlinie eine Wanddicke des Glases von ca. 0,05 mm ergab. Die Bestrahlung wurde weitere 0,25 Sekunden fortgesetzt, worauf sich das Glas längs der Trennlinie trennte. Der an der Trennlinie entstehende Wulst beeinträchtigte weder die lichte Weite des Glasrohres noch überschritt er den Außendurchmesser des Rohres.

## Patentansprüche

1. Verfahren zum wärmeweichen Trennen von Glasrohren oder -platten mit einer Wandstärke von höchstens 0,2 mm, wobei man das Glasrohr oder die Glasplatte an der Trennstelle in einer Breite von höchstens 0,4 mm erweicht, den erweichten Bereich durch Ausziehen auf eine Wandstärke von höchstens 0,05 mm bringt und anschließend durch weiteres Erhitzen im ausgezogenen Bereich trennt.

2. Verfahren nach Anspruch 1,
d**adurch gekennzeichnet,**
daß man das Glas in einer Breite von höchstens 0,3 mm erweicht.

3. Verfahren nach Anspruch 1 oder 2,
**dadurch gekennzeichnet,**
da man den erweichten Bereich auf eine Wandstärke von höchstens 0,03 mm auszieht.

4. Verfahren nach einem oder mehreren der Ansprüche 1 bis 3,
**dadurch gekennzeichnet,**
daß man die Erweichung und die Trennung mittels eines Laserstrahls vornimmt.

## Claims

1. Process for the heat-softened parting of glass tubes or plates having a wall thickness of not more than 0.2 mm, wherein the glass tube or the glass plate is softened at the parting location to a width of not more than 0.4 mm, the softened region is brought to a wall thickness of not more than 0.05 mm by drawing and the glass tube or plate is subsequently parted by further heating in the drawn region.

2. Process according to Claim 1, characterized in that the glass is softened to a width of not more than 0.3 mm.

3. Process according to Claim 1 or 2, characterized in that the softened region is drawn to a wall thickness of not more than 0.03 mm.

4. Process according to one or more of Claims 1 to 3, characterized in that the softening and the parting are carried out by means of a laser beam.

## Revendications

1. Procédé de séparation à chaud de tubes ou de plaques en verre ayant une épaisseur de paroi d'au plus 0,2 mm, lors duquel l'on chauffe le tube en verre ou la plaque en verre au point de séparation sur une largeur d'au plus 0,4 mm, l'on amène la zone ramollie par étirage à une épaisseur de paroi d'au plus 0,05 mm et l'on procède ensuite à la séparation par un chauffage supplémentaire dans la zone étirée.

2. Procédé selon la revendication 1, caractérisé en ce que l'on ramollit le verre sur une largeur d'au plus 0,3 mm.

3. Procédé selon la revendication 1 ou 2, caractérisé en ce que l'on étire la zone ramollie à une épaisseur de paroi d'au plus 0,03 mm.

4. Procédé selon une ou plusieurs des revendications 1 à 3, caractérisé en ce que le ramollissement et la séparation se font à l'aide d'un rayon laser.
